# EUROPEAN PATENT APPLICATION

(11) **EP 3 109 037 A1**
(43) Date of publication of application: **28.12.2016**
(21) Application number: 16152474.9
(22) Date of filing: 22.01.2016
(51) Int. Cl.: B29D 23/00, B29C 47/00, F16L 9/12, F28F 21/02, F28F 21/06, F28F 1/40

(54) **PLASTIC TUBES FOR HEAT EXCHANGERS AND METHOD FOR MANUFACTURING PLASTIC TUBES FOR HEAT EXCHANGERS AND USE OF PLASTIC TUBES FOR HEAT EXCHANGERS**

(71) Applicant: Technoform Tailored Solutions Holding GmbH, 34117 Kassel (DE)
(72) Inventor: ORTH, Thomas, 34253 Lohfelden (DE); MOSES, Dirk, 34253 Lohfelden (DE); OSSADNIK, Sebastian, 34253 Lohfelden (DE); DUEWELL, Jasmin, 34253 Lohfelden (DE); MUELLER, Patrick, 34253 Lohfelden (DE)
(74) Representative: Kramer Barske Schmidtchen Patentanwälte PartG mbB

(57) **Abstract**

A plastic tube (1) containing graphite filler material in an amount of 40 to 90 weight % of the total mass of the plastic tube and having tube walls with a wall thickness equal to or larger than 0,75 mm is disclosed, wherein the graphite filler material consists of a mixture of a first graphite powder essentially consisting of platelets, strands or fibres and a second graphite powder essentially consisting of spherical particles and the amount of the second graphite powder is selected to be within a range of 0 to 50 weight % of the total mass of the graphite filler material, 50% or more of the graphite platelets, strands or fibres of the first graphite powder in a region with a distance of at least 0,1 mm from the tube wall surfaces are oriented in a range of 45 to 90° relative to the longitudinal direction (z) of the plastic tube, and the outer surface (2) of the tube wall has been subject to a surface activation increasing the surface energy by flame treatment.

## Description

The present invention relates to plastic tubes with high thermal conductivity suitable for use in heat exchangers and to methods for manufacturing plastic tubes with high thermal conductivity suitable for use in heat exchangers and to uses of plastic tubes with high thermal conductivity in heat exchangers.

Plastic tubes with high thermal conductivity suitable for use in heat exchangers using graphite fillers for superior heat conductivities due to the specific composition and orientation of the fillers in extruded plastic tubes have been disclosed in the article "Method for manufacturing plastic tubes for heat exchangers containing graphite fillers" published on 06 March 2014 by Prior Art Publishing GmbH, Berlin, Germany in the database www.priorartregister.com with publication number PAPDEOTT002961. The plastic tubes disclosed therein include a high amount of graphite in an oriented manner, which orientation is generated by the extrusion process. Techniques for extrusion of plastic materials with orienting filler or reinforcing materials such as glass fibres or carbon fibres etc. are known in the art, e.g., from DE 38 01 574 C2.

In various facilities and devices heat is generated intentionally, or heat, which is generated by the main function of such facilities and devices, has to be removed. In order to preserve fossile fuel resources, it is required to use said heat in an effective manner, such that the maximum energetic effect is achieved by the heat generated by said facilities and devices, or such that said facilities and devices can be configured in a more compact form. In this context, heat exchangers are used as a means for separating primary and secondary processes.

Heat is intentionally introduced into or generated in facilities or devices such as power stations, refrigerating devices, combustion engines and seawater desalination plants. The heat is required for the main operation function of such facilities or devices. However, the heat needs to be exchanged or discharged or dissipated in or from such facilities or devices. This is achieved by heat exchangers.

Tubes for heat exchangers are usually manufactured from metals in order to achieve high efficiency, since metals have higher heat conductivities than plastics and ceramics.

In the past, plastics containing fillers having a good thermal conductivity did not achieve the thermal conductivity of metals. Moreover, known plastics containing a large amount of filler become brittle and cannot be used for a variety of applications.

Metal tubes used with corrosive media, like for example media present in exhaust gases of combustion engines or in seawater desalination plants, are corroded. In addition, in some applications like for example in seawater desalination plants, there is a tendency that solid material is deposited on the surface of the metals during the use, deteriorating the heat conductivity of the tubes. Metal tubes in contact with such media have to be frequently flushed or exchanged. These problems can be partly avoided by using corrosion-resistant metals, like, for example, titanium, However, these metals also tend to have deposits on their surface and they are expensive.

Thus, there exists a need to provide tubes suitable for in heat exchangers having superior heat conductivity and avoiding problems of forming deposits and corrosion at low costs.

PAPDEOTT002961 discloses a method for manufacturing such plastic tubes, wherein a mixture of graphite fillers with different shapes is added to a plastic material before extrusion and the filler-containing plastic material is extruded in a manner providing an orientation to a large part of the graphite fillers, which orientation is not parallel to the extrusion direction (=longitudinal direction of the plastic tubes) but in a range of 45° to 90° relative to the extrusion direction.

Specifically, the filler incorporated in the plastic material includes a mixture of a graphite powder essentially consisting of platelets, strands or fibres, in particular fibres of expanded graphite, and a graphite powder essentially consisting of spherical particles. The particles of the graphite powder essentially consisting of platelets, strands or fibres, in particular fibres of expanded graphite, have shapes with longer extension lengths in one dimension like fibres or in two dimensions like platelets. In this text, the description of an orientation of these particles having shapes with longer extension lengths in one or two dimensions in a direction not parallel to another direction like the extrusion direction or the longitudinal direction of a tube means that the particles are oriented such that their extension in this one direction with longer extension lengths or their extension in at least one of the two directions with longer extension lengths is not parallel the other direction like the extrusion direction or the longitudinal direction of a tube.

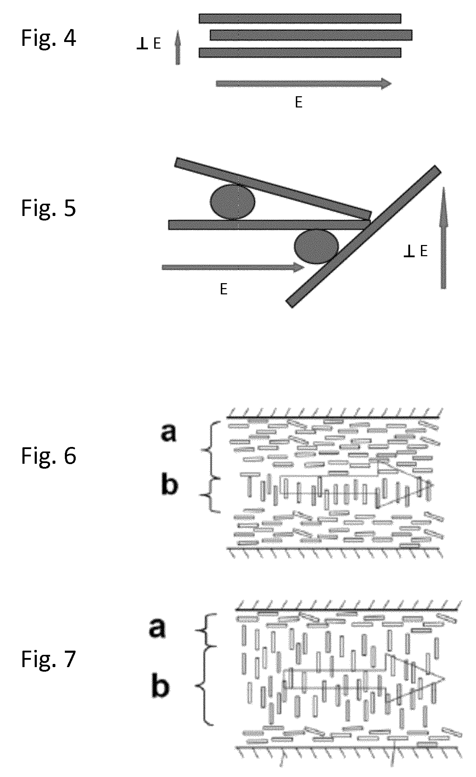

The non-parallel orientation is achieved, in a first step of the method, by adding the graphite powder essentially consisting of spherical particles to the plastic to be extruded. At the latest in the course of the extrusion, the spherical particles are pressed between the platelets, strands or fibres and force at least a part of them in a direction orthogonal to the extrusion direction, even if no other orientation measures are taken. Fig. 4 shows the orientation of filler material consisting of platelets, strands or fibers only, wherein the filler particles are oriented parallel to the extrusion direction E. Fig. 5 shows the orientation of filler material including the mixture described above, wherein a significant part of the platelets, strands or fibers are oriented in directions not parallel to the extrusion direction E due to the presence of the spherical particles.

The non-parallel orientation is further achieved, in a second step of the method, by extruding the filler-containing plastic material with orienting the filler materials such that 50% or more of the graphite platelets, strands or fibres are oriented in a range of 45 to 90° relative to the extrusion direction E at least in interior regions of the tube wall in a second step. This orienting extrusion is carried out by a specific melt guidance in the extrusion tool, which includes introducing the molten filler-containing plastic material in a very narrow die gap, such that a lateral flow is generated which causes swirling within the melt leading to said non-parallel orientation of the graphite platelets, strands or fibres. The first step supports the second step by enhancing the effect of orienting the filler materials. Thus, the heat conductivity in the direction orthogonal to the extrusion direction E of the plastic tubes is enhanced by the combinatorial effect of the steps. Fig. 6 to 8 illustrate the effects of the method.

Fig. 6 shows a schematic cross-section of a plastic tube manufactured by a conventional non-orienting extrusion method, and Fig. 7 shows a schematic cross-section of a plastic tube manufactured by the orienting extrusion method. The spherical filler material is not shown in Fig. 6 and 7 to simplify the illustration. An orthogonal orientation of platelets, strands or fibres is present, if at all, in a rather narrow area b in Fig. 6, whereas an orientation of platelets, strands or fibres parallel to the extrusion direction is present in rather large areas a along the tube wall surfaces. In contrast, an orthogonal orientation of platelets, strands or fibres is present in a rather large area b in Fig. 7, whereas an orientation of platelets, strands or fibres parallel to the extrusion direction is present in rather narrow areas a along the tube wall surfaces.

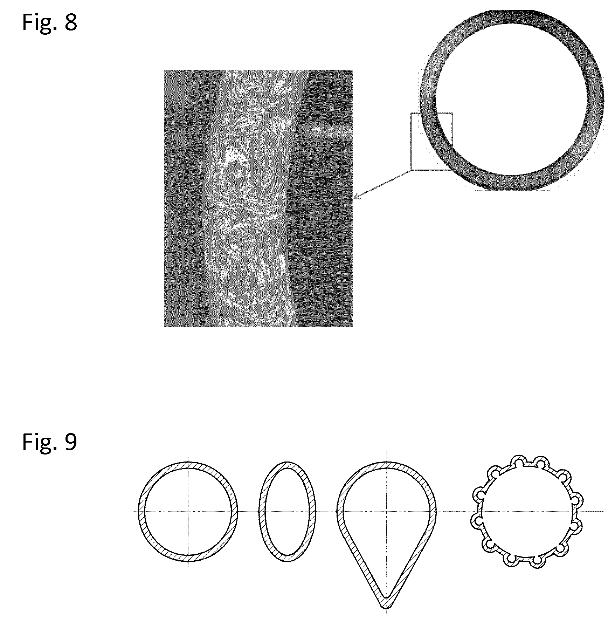

Fig. 8 shows a cross-section of a graphite-filled plastic tube obtained with the orienting method on the right side and an enlarged part on the left side showing the orientation of the filler materials which is not parallel to the extrusion direction.

PAPDEOTT002961 describes the total amount of filler in the tube material to be selected within a range of 20 to 80 % by weight such that a suitable balance of mechanical properties and heat conductivity is achieved, and the ratio of the spherical particles to the total amount of graphite fillers to be selected in an appropriate manner, within a range of 10 to 50 % by weight.

PAPDEOTT002961 describes any extrudable plastic material can used and non-limiting examples as polyolefins, like, for example, polypropylene (PP), in particular a PP homopolymer, polyesters, polyamides, polyarylene sulfides, polyarylene oxides, polysulfones, polyimides, polyarylates, polyetherimides, polycarbonates, poly(ether ketones)s, copolymers of said polymers among each other and/or with other polymers, including thermoplastic elastomers, and mixtures of said polymers and copolymers.

PAPDEOTT002961 describes that the obtained tubes achieve a thermal conductivity orthogonal to the extrusion direction (longitudinal tube direction) of 5 to 10 or more W/mK, that problems of corrosion and forming of deposits are avoided, and that a variety of specific tube shapes or profiles different from tubes having a circular cross-section can be provided as shown in Fig. 9.

It is an object of the invention to provide further improvements of the plastic tubes for heat exchangers regarding the applicability in environments with potential problems due to fouling or scaling.

This object is achieved by a plastic tube according to claim 1 or 2, a method for manufacturing a plastic tube according to claim 10 or 11 and a use of a plastic tube according to claim 14.

Further developments of the invention are given in the dependent claims.

The invention provides a plastic tube suitable for use in environments with potential problems due to fouling or scaling due to its advantageous characteristics enabling to prevent the deposition and or strong attachment of material on the tube surfaces in such environments due its specifically suitable surface activation and/or its specifically suitable vibration characteristics including vibration stability despite the much higher thermal conductivity orthogonal to the extrusion direction than present in standard plastic tubes.

These characteristics allow an optimum heat transfer from the first moment of use even if a significant time passed since the production of the tube and/or if there are material layers deposited in fouling/scaling environments. One reason is that the surface wettability (wetting behaviour) is very high for plastic materials (surface contact angles for water ≤ 90°, preferably ≤ 75°, e.g. 69°) and comparable to that of metals from the first moment of use even if a significant time passed since the production of the tube due to the surface activation. This fact allows, together with the high thermal conductivity orthogonal to the extrusion direction, a very good heat transfer without requiring additional measures. The high surface wettability also prevents or reduces the forming and attachment of material layers usually deposited in fouling/scaling environments.

A good long term vibration stability despite the high content of graphite allows to use vibrations/oscillations applied to the tubes to prevent attachment and/or remove material layers usually deposited in fouling/scaling environments. The two features combine in a synergetic effect as effects of the the high surface wettability and of the good long term vibration stability each prevent or at least allow a significant reduction of the forming and attachment of material layers usually deposited in fouling/scaling environments but the combination of their effects enhances the same.

These effects are independently useful. They are especially useful in water desalination facilities or devices but they are also useful in other facilities or devices in power stations, refrigerating devices, combustion engines etc. having potential problems with forming and attachment of material layers usually deposited in fouling/scaling environments or other environments resulting in such forming and attachment of material layers.

Further advantageous and useful features follow from the description of embodiments referring to the drawings. The drawings show:
- Fig. 1: a schematic cross-sectional view of a first embodiment in a) and an enlarged cross-sectional view of the first embodiment in b);
- Fig. 2.: a schematic cross-sectional view of a second embodiment in a) and an enlarged cross-sectional view of the first embodiment in b);
- Fig. 3: a schematic cross-sectional view of a third embodiment in a) and an enlarged cross-sectional view of the first embodiment in b);
- Fig. 4: a schematic representation of the orientation of filler material;
- Fig. 5: a schematic representation of another orientation of filler material;
- Fig. 6: a schematic cross-sectional view of plastic tube manufactured by a conventional non-orienting extrusion method;
- Fig. 7: a schematic cross-sectional view of plastic tube manufactured by an orienting extrusion method;
- Fig. 8: a cross-sectional view of a graphite-filled plastic tube obtained with an orienting extrusion method on the right side and an enlarged part of the cross-sectional view on the left side;
- Fig. 9: exemplary cross-sectional views of plastic tubes;
- Fig. 10: a schematic cross-sectional view of a fourth embodiment in a) and an enlarged cross-sectional view of the first embodiment in b); and
- Fig. 11: a partial cross-sectional view of a fifth embodiment.

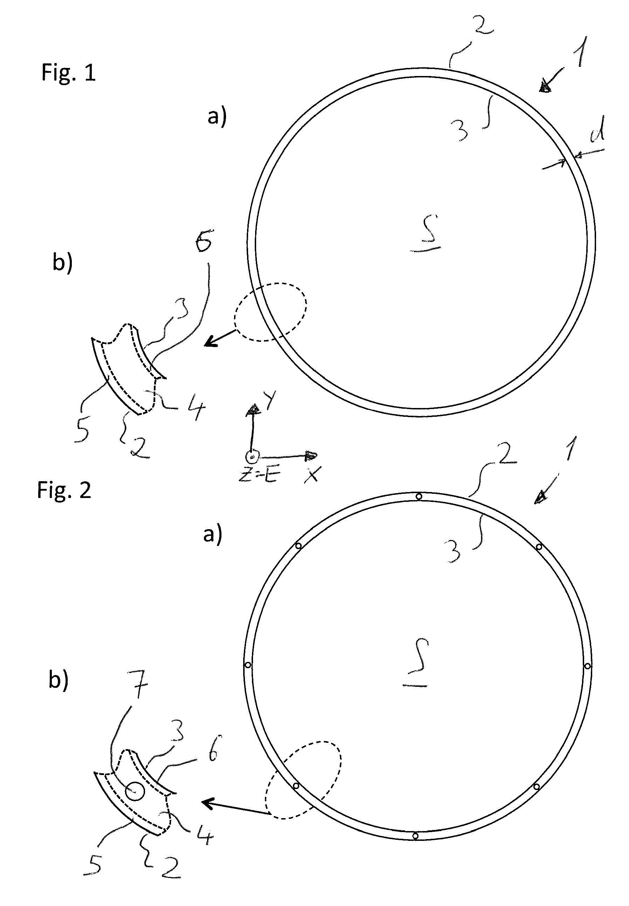

A first embodiment, which is especially suitable for use as a heat exchanger tube in Multiple-Effect-Distillation (MED) applications, is described referring to Fig. 1a) and b). Fig. 1a) shows a schematic cross-sectional view of a plastic tube 1. An enlarged view of a portion in the area encircled by the hatched line in Fig. 1a) is shown in Fig. 1b). The cross-section extends in the x-y plane and the plastic tube extends in the longitudinal direction z. The plastic tube has an outer surface 2 and an inner surface 3. An inner space S is enclosed by the plastic tube 1. The plastic tube 1 is made of a plastic material containing a graphite-filler material in an amount of 20 to 90 weight% of the total mass of the plastic tube. Regarding the plastic materials and the graphite materials, the same materials as disclosed in PAPDEOTT002961 can be used.

The size of the platelets, strands or fibres and the size of the spherical particles is not specifically limited and can be suitable selected by the skilled person. Preferably, the platelets, strands or fibres may have a length of 1 µm to 6 mm and a thickness of 1 nm to 500 µm. Preferably, the spherical particles may have a mean diameter of 1 to 500 µm. Furthermore, the term spherical particles doesn't require exactly spherical particles but any elliptic or oval or similar particles having suitable aspect ratios in the range of 1 to 10, preferably 1 to 5 can be used.

The plastic tube can be made from any extrudable plastic material as disclosed in PAPDEOTT002961 and also thermoplastic materials like polybutylene terphtalate (PBT), acrylonitrile butadiene styrene (ABS) and polysulphones (PSU or PES or PPSU) as non-limiting examples. Preferably, the plastic material is PP, in particular a PP homopolymer, or polyphenylenesulfide (PPS), or polyketone (PK) or syndiotactic polystyrene (SPS) or polyether(etherketone) (PEEK).

The graphite-filler material preferably consists of a mixture of a first graphite powder essentially consisting (more than 75 weight%) of spherical of platelets, strands or fibres having an average size in the direction of their longest extension in the range from 1 µm to 6000 µm, preferably 100 µm to 4000µm or 2500 µm, and a second graphite powder essentially consisting of spherical particles having average sizes in the range from 20 µm to 200 µm. The amount of the second graphite powder is selected to be within the range of 0 to 50 weight%, preferably 10 to 50 weight%, of the total mass of the graphite filler material. The wall thickness d of the plastic tube 1 is in the range from 0.75 mm to 10 mm, preferably 0.75mm to 5mm. In the embodiment shown in Fig. 1, it is preferably 1.25 mm.

The filler materials can also be made of boron nitride (white graphite) with the corresponding dimensions and particle distributions as the graphite powders and/or carbon nanotubes (CNTs) with average lengths in the range from 1 µm to 500µm and average diameters of 5nm to 30nm, e.g. an average length of 1.5 µm and an average diameters of 10 nm (available as Nanocyl™ NC 7000 Thin Multiwall) and/or graphene, which graphene may be made of one layer or plural layer structures with thicknesses in the range of 0.25nm to 5nm and an average length of the longer sides of their plate-like structures in the range from 1µm to 750µm.

The outer surface 2 of the plastic tube 1 is surface activated by a flame treatment such as surface activation by a flame treatment creates an activated layer 5 at and below the surface 2. Alternatively, specific additives could be added during extrusion of the plastic tube to create a surface activated layer 5 at and under the outer surface 2. Depending on the application, it is also possible to apply a surface activation to only the inner or outer surface or to both surfaces. The plastic tube 1 is extruded with an orienting extrusion method as described in PAPDEOTT002961 resulting in an orientation of the graphite platelets, strands or fibres of the first graphite powder in an inner part or region 4 of the wall of a plastic tube 1 such that 50% or more of the graphite platelets, strands or fibres of the first graphite powder are oriented in a range of 45° to 90° relative to the longitudinal direction z of the plastic tube, which corresponds to the extrusion direction E of the plastic tube 1. The inner part or inner region 4 of the plastic tube 1 has a distance of at least 0.1 mm from the tube wall surfaces 2, 3. The maximum distance is preferably 0.3 mm.

The inner surface 3 of the plastic tube 1 is preferably not surface activated for the MED application to enhance the surface energy. More preferably, the inner surface 3 is treated to even reduce its surface energy for the MED application, e.g. by providing corresponding additives in a layer 6 at and below the inner surface 3 of the plastic tube 1.

A flame treatment is preferred as the method for surface activation of the outer surface 2 of the plastic tube 1. The reason is that the effects of this type of surface activation have shown to last for a long time after the production of the plastic tube, different from other physical surface activation treatments like corona discharge and the like.

The flame treatment is preferably conducted at a flame temperature in the range of 500°C to 2000°C, preferably at 1600°C, 1700°C or 1800°C, with a distance of 0cm to 15 cm from the outer surface 2 of the tube wall, preferably a distance of 0 to 1 cm. At such short distances, the time is critical and preferably in the range of flame contact for 0.1s to 2s.

A similar surface activation effect could also be achieved by including additives in a layer at and below the outer surface 2 of the tube 1, but this makes the extrusion more complicated and expensive and is therefore not preferred but possible.

All features described with respect to the first embodiment also apply to the second to fifth embodiments and their modifications, unless it is described differently. Moreover, the same reference numerals used for the first embodiment in Fig. 1 are useful for the same features in the second to fifth embodiments shown in Fig. 2, 3, 10 and 11. A corresponding description is not repeated.

A second embodiment is described with respect to Fig. 2. The second embodiment comprises reinforcement elements embedded in the tube wall. The reinforcement elements in the second embodiment are preferably wires 7 extending in the longitudinal direction z = E of the plastic tube 1. The wires 7 have a diameter smaller than the wall thickness d and are completely embedded within the plastic material of the plastic tube 1. The wires 7 extend parallel to the longitudinal axis of the tube 1. Alternatively, in a modification of the second embodiment, it is possible that the wires 7 extend in a helix around the tube axis. The wires 7 are coextruded in the orienting extrusion method. Alternativly, fibre bundles or rovings of endless fibres of carbon, glass, aramide or the like can be used as reinforcement elements 7.

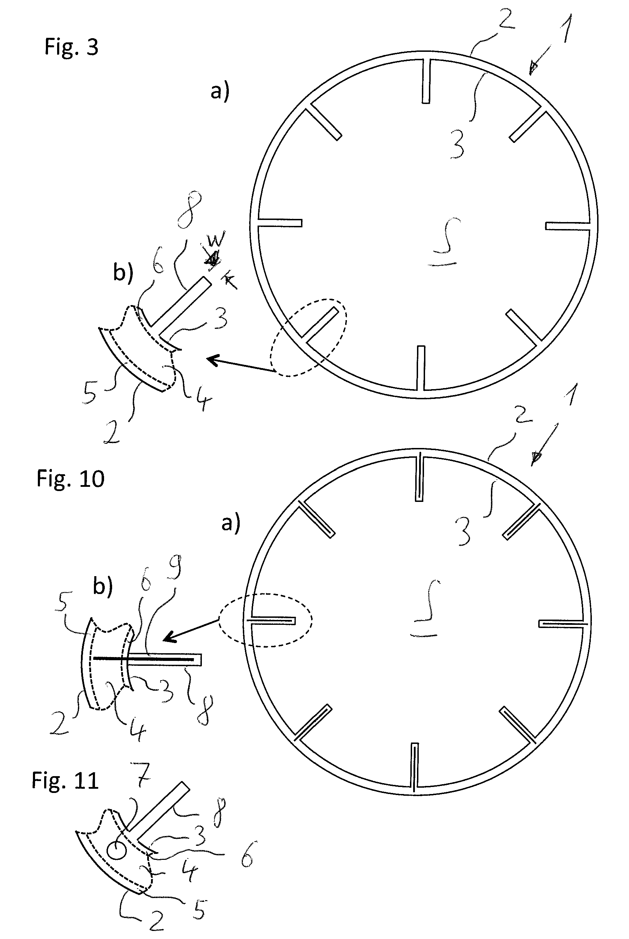

A third embodiment is described with respect to Fig. 3. The plastic tube 1 comprises fin-like protrusions 8 radially extending from the inner wall surface 3 of the plastic tube 1 towards the tube axis into the inner space S. As with the first and second embodiments, surface activation at the outer surface 2 is possible. In addition, the fins increase the stability of the plastic tube 1 and act as reinforcement elements.

Although it is not shown in the cross-section in Fig. 3b), it is possible to achieve orientation of the platelets, strands or fibres of the first graphite powder such that their orientation is essentially in radial direction. A thickness w of the protrusions in circumferential direction is in the range from 0.5 mm to 5 mm, preferably 0.5mm to 2.5mm.

A fourth embodiment is described with respect to Fig. 10. The fourth embodiment corresponds to the third embodiment with added reinforcement sheets 9 extending in the longitudinal direction z = E. One sheet 9 extends in one of the fins 8 and in the tube wall into the inner region 4. The reinforcement sheets 9 are preferably made of metal like steel or the like. The reinforcement sheets 9 are coextruded in the orienting extrusion method. They are completely embedded in the plastic material. Accordingly, their radial extension is smaller than the sum of the tube wall thickness d and the radial length of the protrusions 8.

A fifth embodiment is described with respect to Fig. 11. In Fig. 11, only one enlarged schematic cross-sectional view corresponding to the views in Fig. 1b), 2b), 3b) and 10b) is shown. The fifth embodiment differs from the third embodiment in that reinforcement elements in form of wires 7 are provided like in the second embodiment. In modifications of the third and fifth embodiments, the fin-like protrusions 8 can extend in the longitudinal direction z = E in a helix. Such a helix-shape will increase a potential mixing of any fluid flowing in the inner space S of the plastic tube 1.

The plastic tubes 1 can be provided with diameters from 5 mm upwards, preferably in the range 10mm to 1000mm.

The tube wall thickness d can be in the range from 0.75 mm to 2 mm. Especially in case the tube wall thickness is in the range from 0.75 mm to 1.2 mm, it is advantageous to provide reinforcement elements like the wires 7 or the sheet material 9 and/or fin-like protrusions 8 to increase the stability of the tubes, especially for larger tube diameters.

The provision of a radial orientation of the platelets, strands or fibres of the first graphite powder in the radial direction in the fin-like protrusions 8 and/or the provision of a sheet material 9 with high thermal conductivity, like metal sheet material, advantageously increases the heat conductivity in the radial directions.

The plastic tubes 1 are especially useful for use in water desalination apparatusses as heat exchanger tubes. MED devices are operated at temperatures higher than 30°C, where the highest temperature stage is at approx. 65°C to 70°C and the lowest temperature stage is at aprrox. 32°C to 35°C. In particular, the plastic tubes according to the above described embodiments will enable the use of higher process temperatures than 70°C, even higher than 80°C like 85°C or 86°C or 87°C or 88°C or 89°C or 90°C or even higher. Especially for use of plastic tubes in water desalination apparatuses with process temperatures of 80°C and more, the preferred plastic materials are especially useful. In other desalination processes, the temperatures are higher such as 120°C and the the plastic tubes according to the above described embodiments will enable the use of even higher process temperatures of up to 200°C with PEEK or PPS as non-limiting examples.

Even at such high temperatures, the superior characteristics of the plastic material, in particular the reduced attachment of deposit materials will be of great advantage.

The plastic tubes do not have necessarily a circular or nearly circular cross section but can have any shapes with closed cross section. Plastic profiles which are not necessarily closed in their cross section, e.g., for air cooling application, which plastic profiles have all the other described characteristics are explicitly disclosed as part of the invention.

The plastic tubes can have any value of wall thickness or diameter within the disclosed ranges. In particular, wall thicknesses in the range from 0.75 mm to 3 mm, such as 0.75 mm, 0.8 mm, 0.9 mm, 1 mm, 1.1 mm, 1.2 mm, 1.25 mm, 1.3 mm, 1.4 mm, 1.5 mm, ..., are especially useful for heat exchanger applications at tube diameters in the range of 10 mm to 150 mm.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. Plastic tube containing graphite or boron nitride or graphene or carbon nanotube filler material in an amount of 20 to 90 weight % of the total mass of the plastic tube (1) and having tube walls with a wall thickness equal to or larger than 0,75 mm, wherein
the graphite or boron nitride or graphene or carbon nanotube filler material consists of a mixture of a first powder essentially consisting of platelets, strands or fibres and a second powder essentially consisting of spherical particles and the amount of the second powder is selected to be within a range of 0 to 50 weight % of the total mass of the graphite or boron nitride or graphene or carbon nanotube filler material,
50% or more of the platelets, strands or fibres of the first powder in a region with a distance of at least 0,1 mm from the tube wall surfaces are oriented in a range of 45 to 90° relative to the longitudinal direction (z) of the plastic tube, and
the outer surface (2) of the tube wall has been subject to a surface activation increasing the surface energy by flame treatment.

2. Plastic tube (1) containing graphite or boron nitride or graphene or carbon nanotube filler material in an amount of 20 to 90 weight % of the total mass of the plastic tube (1) and having tube walls with a wall thickness equal to or larger than 0,75mm, wherein
the graphite or boron nitride or graphene or carbon nanotube filler material consists of a mixture of a first powder essentially consisting of platelets, strands or fibres and a second powder essentially consisting of spherical particles and the amount of the second powder is selected to be within a range of 0 to 50 weight % of the total mass of the graphite or boron nitride or graphene or carbon nanotube filler material,
50% or more of the platelets, strands or fibres of the first powder in a region with a distance of at least 0,1 mm from the tube wall surfaces are oriented in a range of 45 to 90° relative to the longitudinal direction (z) of the plastic tube, and
reinforcement elements (7; 9) extending in the longitudinal direction (z) are embedded in the tube wall.

3. Plastic tube according to claim 2, wherein the outer surface (2) of the tube wall has been subject to a surface activation increasing the surface energy by flame treatment.

4. Plastic tube according to claim 1 or 3, wherein the flame treatment is conducted at a flame temperature of 1600°C to 1800°C with a distance to the surface in the range of 0 mm to 15 mm.

5. Plastic tube according to one of claims 2 to 4, wherein
the reinforcement elements are wires (7) or endless fibre bundles having a diameter smaller than the wall thickness (d) of the tube wall and are coextruded with the tube.

6. Plastic tube according to one of claims 1 to 5, wherein
the tube comprises one or a plurality of protrusions (8) extending in the longitudinal direction (z) of the tube and having a fin-like shape in a cross-section perpendicular to the longitudinal direction.

7. Plastic tube according to one of claims 1 to 6, wherein
the tube comprises one or a plurality of metal sheets (9) having a sheet plane extending in the longitudinal direction (z) of the tube and perpendicular to the longitudinal direction (z) of the plastic tube, which metal sheets are either provided as reinforcement elements of claim 2 and/or are provided additional to reinforcement elements of claim 2.

8. Plastic tube according to claim 6 and 7, wherein
the one or the plurality of metal sheets (9) having a sheet plane extending in the longitudinal direction of the tube and perpendicular to the longitudinal direction of the plastic tube are embedded in the one or the plurality of protrusions (8) having a fin-like shape in a cross-section perpendicular to the longitudinal direction of claim 6.

9. Plastic tube according to one of claims 1 to 8, wherein
the tube (1) comprises a radially outer surface (2) with subject to a surface activation increasing the surface energy and a radially inner surface (3) not subjected to a surface activation increasing the surface energy or subjected to a surface deactivation reducing the surface energy.

10. Method for manufacturing a plastic tube with the steps:
mixing plastic material and graphite or boron nitride or graphene or carbon nanotube filler material consisting of a mixture of a first powder essentially consisting of platelets, strands or fibres and a second powder essentially consisting of spherical particles and the amount of the second powder is selected to be within a range of 0 to 50 weight % of the total mass of the graphite or boron nitride or graphene or carbon nanotube filler material such that an amount of the graphite or boron nitride or graphene or carbon nanotube filler material is in the range 20 to 90 weight % of the total mass of the mixed plastic material,
extruding a plastic tube from the mixed plastic material having a tube wall with a wall thickness equal to or larger than 0,75mm such that 50% or more of the platelets, strands or fibres of the first powder in a region with a distance of at least 0,1 mm from the tube wall surfaces are oriented in a range of 45 to 90° relative to the longitudinal direction (z) of the plastic tube, and
treating the outer surface (2) of the tube wall in a surface activation increasing the surface energy by flame treatment.

11. Method for manufacturing a plastic tube with the steps:
mixing plastic material and graphite or boron nitride or graphene or carbon nanotube filler material consisting of a mixture of a first powder essentially consisting of platelets, strands or fibres and a second powder essentially consisting of spherical particles and the amount of the second powder is selected to be within a range of 0 to 50 weight % of the total mass of the graphite or boron nitride or graphene or carbon nanotube filler material such that an amount of the graphite or boron nitride or graphene or carbon nanotube filler material is in the range 20 to 90 weight % of the total mass of the mixed plastic material,
extruding a plastic tube from the mixed plastic material having a tube wall with a wall thickness equal to or larger than 0,75mm such that 50% or more of the platelets, strands or fibres of the first graphite powder in a region with a distance of at least 0,1 mm from the tube wall surfaces are oriented in a range of 45 to 90° relative to the longitudinal direction (z) of the plastic tube, and
embedding reinforcement elements extending in the longitudinal direction in the tube wall.

12. Method for manufacturing a plastic tube according to claim 10, comprising the step of embedding reinforcement elements extending in the longitudinal direction in the tube wall.

13. Method for manufacturing a plastic tube according to one of claims 10 to 12,
wherein the step of extruding the tube comprises extruding the same with one or a plurality of protrusions extending in the longitudinal direction of the tube and having a fin-like shape in a cross-section perpendicular to the longitudinal direction.

14. Use of a plastic tube according to one of claims 1 to 9 in a water desalination apparatus as a heat exchanger tube at a temperature higher than 30°C, preferably higher 70°C, preferably higher than 80°C and more preferably higher than 85°C.

15. Use of a plastic tube according to claim 14, wherein vibrations are applied to the tube.
